(19) Europäisches Patentamt
European Patent Office
Office européen des brevets

(11) **EP 3 853 112 B1**

(12) **EUROPEAN PATENT SPECIFICATION**

(45) Date of publication and mention
of the grant of the patent:
**21.09.2022 Bulletin 2022/38**

(21) Application number: **19773913.9**

(22) Date of filing: **07.08.2019**

(51) International Patent Classification (IPC):
**B60K 1/04** *(2019.01)* **B62D 37/04** *(2006.01)*
**B60F 3/00** *(2006.01)* **B62D 61/02** *(2006.01)*
**B62D 61/00** *(2006.01)* **B60K 7/00** *(2006.01)*

(52) Cooperative Patent Classification (CPC):
**B62D 37/04; B60F 3/0007; B60K 1/04;
B60K 7/0007; B62D 61/00;** B60K 2001/045

(86) International application number:
**PCT/IB2019/056715**

(87) International publication number:
**WO 2020/058783 (26.03.2020 Gazette 2020/13)**

(54) **TWO-WHEEL VEHICLE WITH INDEPENDENT INTERNAL MOTORIZED PROPULSION TROLLEYS**

ZWEIRADFAHRZEUG MIT UNABHÄNGIGEN INTERNEN MOTORISIERTEN ANTRIEBSWAGEN

VÉHICULE À DEUX ROUES À CHARIOTS À PROPULSION MOTORISÉE INTERNES INDÉPENDANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2018 IT 201800008680**

(43) Date of publication of application:
**28.07.2021 Bulletin 2021/30**

(73) Proprietor: **Def-Tech SAS. di Cimino Gabriella
00142 Roma (RM) (IT)**

(72) Inventors:
• **DE FRANCESCO, Eduardo
  00142 Roma (RM) (IT)**
• **DE FRANCESCO, Ettore
  00142 Roma (RM) (IT)**
• **DE FRANCESCO, Ruggero
  00142 Roma (RM) (IT)**

(74) Representative: **Fiammenghi, Eva et al
Fiammenghi - Fiammenghi
Via delle Quattro Fontane, 31
00184 Roma (IT)**

(56) References cited:
WO-A1-01/28795    WO-A1-2017/042230
DE-A1- 3 103 961    US-A- 1 357 571

## Description

Field of the art

The present invention refers to a self-propelled vehicle, so-called "rover", constituting a multipurpose platform with capacity of movement over solid terrain, liquid terrain, yieldable terrain (soft, such as snow or mud), and even usable as an amphibious vehicle.

Prior art

In the art, self-propelled vehicles (i.e. provided with their own propulsion), with only two wheels, are known and on such matter reference is made to the description of the documents US 1,357,571, DE 31 03 961 A, WO 2017/042230.

The document US 1,357,571 describes a two-wheel self-propelled vehicle in which, within the wheels, motors are provided whose output shaft bears a gear wheel which is engaged with an internal ring gear of the respective wheel. The motors also act as ballast. One drawback of such solution lies in the fact that the axle of the wheels is strongly stressed by the weights/ballast and can be bent. The loads weigh on the axle of the wheels, which therefore in the long run can undergo not signif-icant bending that negatively affects the operating thereof. In addition, during advancement, in particular when the vehicle encounters a greater obstacle/height difference, the gear wheel integral with the motor "rises" on the internal ring gear of the wheel of the vehicle and a considerable force acts on the respective tooth of the internal ring gear of the wheel of the vehicle. This is not convenient. In addition, since the lateral surfaces of the wheel support the weight of the central axle, this cannot be made of light and flexible materials. This reduces the efficiency of the movement, increases the costs and leads to the risk of breakage in the wheel in case of rough terrain. Other disadvantages of the solution proposed by US 1,357,571 as well as other documents of the prior art are not evident in the detailed description relative to the embodiments of the present invention.

DE 31 03 961 A describes a two-wheel self-propelled vehicle which also has weights for maintaining the central station (arranged between the two wheels) in a nearly vertical position during the advancement. A motorized active system is present for moving the weights (the batteries) which are arranged at the lower part in the station, in a manner so as to maintain the station constantly nearly vertical. In this case, the weights/ballast are not mounted in the wheels of the vehicle, but motor and gear systems are instead mounted in order to make a plurality of blades, which serve for transforming the vehicle from land vehicle to amphibious one, exit from or return into, respectively, the rolling surface of the wheels of the vehicle. The disadvantage of this solution is that the ballast is not mounted within the wheels of the vehicle and therefore if a wheel encounters an obstacle/height difference on the terrain, the vehicle becomes unstable, unbalanced/rotating around the axis that is vertical to the (horizontal) axis of the wheels of the vehicle. In addition, this solution proposed in DE 31 03 961 A also has the same disadvantages as US 1,357,571, i.e. the weights lie on the (horizontal) axle of the wheels of the vehicle and the wheels are structural elements, hence very large, costly and not very flexible.

WO 2017/042230, the applicant thereof is the same as the applicant of the present patent application, describes a vehicle movable on surfaces of any type, including water, which exhibits the technical features of the preamble of claim 1. A disadvantage of such vehicle is once again that given by the weight which lies on the axle of the wheels, which thus obliges them to be, once again, structural elements.

In addition, all of the solutions seen occupy a considerable part of the internal volume of the wheels via central axle, limiting the useful load volume that can be transported by the vehicle.

A further disadvantage common to all the solutions proposed up to now is that it is difficult to design propulsion means capable of dispensing a power that can be energetically exploited in an optimal manner (efficiency) in all operating situations, i.e. vehicle operating situations. If the vehicle advances on a substantially regular surface, or over water, then the motor dispenses a mechanically constant power. But if the vehicle encounters an obstacle/height difference, it requires a momentarily high power. For these two extreme situations, the efficiency of the motor can vary considerably. It would therefore be desirable to have a propulsion system with power that can be modulated depending on what is momentarily required for the advancing or handling that the two-wheel vehicle is presently performing, and in which the efficiency of the propulsion means is always maintained at optimal levels. On the basis of such background, the invention proposes resolving the preceding problems by providing a two-wheel self-propelled vehicle, a so-called rover, constituting a multipurpose platform with capacity of movement over solid terrain, liquid terrain, yieldable (soft) terrain, and also usable as amphibious vehicle, in which the problem of the load on the axle of the wheels is substantially eliminated. In order to make use of light, inexpensive and flexible wheels, it has a greater transportable useful load, it follows the roughness of the terrain without generating stresses on the wheel and the power of the propulsion means can be modulated as a function of what is momentarily required for the advancing or handling that the two-wheel vehicle is presently performing, maintaining the efficiency of the propulsion means which is simultaneously optimal in all these situations.

The object is obtained by means of the characteristics contained in claim 1.

Several embodiment variants or particular embodiments are seen in the dependent claims.

Brief description of the drawings

The present invention will be described with reference to a particular embodiment thereof, given only as a non-limiting example, by using the enclosed figures:

- FIGURE 1 shows a very schematic representation of the two-wheel device of the invention, in which the right wheel of the two coupled wheels is seen in transparent view in order to show the trolley;

- FIGURE 2 shows a very schematic representation of the external structure of a wheel, in a perspective view;

- FIGURE 3 shows a perspective view of the trolley with the motors at the hub ("hub motors");

- FIGURE 4 shows a side view of the trolley of Fig. 3;

- FIGURE 5 shows a pair of "hub motors" of the trolley shown in the preceding Fig. 3 and 4;

- FIGURE 6 shows a characteristic curve typical of a motor at the hub (in this case it does not have to be 800 W), so-called "hub motor", used by the present invention;

- FIGURE 7 shows a perspective view of a two-wheel self-propelled vehicle of the prior art (WO 2017/042230).

Detailed description of the preferred embodiments

The present description does not enter into the technical details which are obvious for those skilled in the art of the field. The object is to instruct the man skilled in the art regarding the inventive concept, placing him in the conditions such that he can actuate the invention.

In the figures, the same reference numbers always indicate the same parts, so as to avoid confusion.

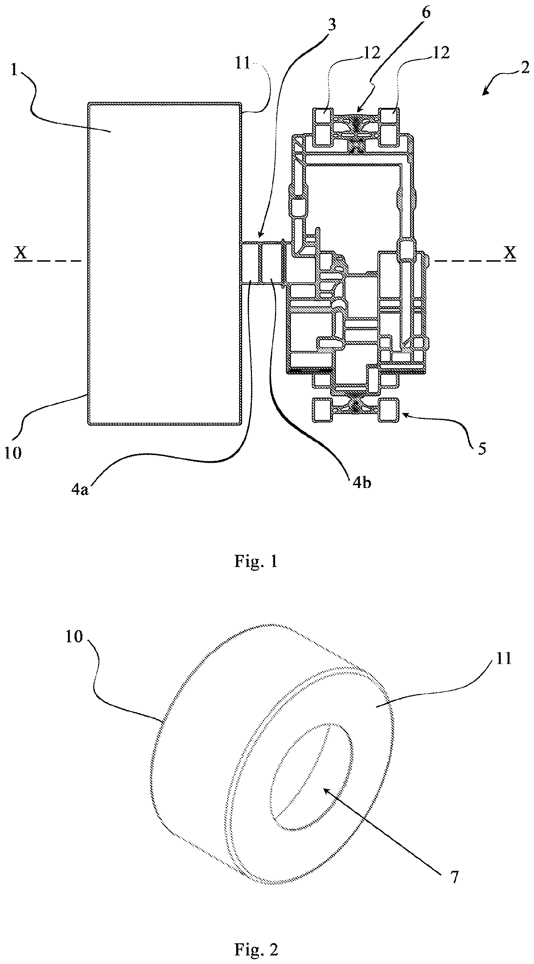

With reference to Fig. 1, it is observed that the vehicle is composed of two wheels 1, but only the left wheel is shown in figure 1 while the right wheel one must imagine (momentarily) removed so to be able to see the structure within the right wheel 1. Of course, the structure 2 shown on the right is an exact replica of that not visible on the left, since here it is hidden by the left wheel 1, shown in figure 1. The figure 1 is merely schematic.

Figure 2 schematically shows, in perspective view, one of the two wheels 1, 1, identical to each other, of the two-wheel self-propelled vehicle of the present invention.

Since the internal parts of the wheels 1, 1 are mirrored, i.e. replicas of each other, here only one wheel 1 and the relative internal structure 2 will be described.

It is necessary to observe that the wheel 1 is substantially a hollow body, as is seen in figure 2. The two wheels 1 are connected to each other by a hub 3 formed by two cylindrical hollow parts 4a, 4b, respectively connected to the corresponding internal structure 2 of a wheel 1. Then, the cylindrical hollow part 4a of the hub 3 is connected both to the internal structure 2 of the left wheel 1 and, in a rotatable manner, to the cylindrical hollow part 4b by means of suitable bearings, and in the same manner the cylindrical hollow part 4b of the hub 3 is connected both to the internal structure 2 of the right wheel 1 and, in a rotatable manner, to the cylindrical hollow part 4a, by means of said bearings (not shown). The axle of the wheels is then composed of only hub 3 (4a and 4b), which is rather large, but loads substantially do not lie on this, in accordance with the present invention.

As will be described in detail, the structures 2 are not connected to the respective wheels, but rather they simply roll on the/against the internal cylindrical surface of the wheel 1, situated on the opposite side with respect to the external cylindrical rolling surface (which is in contact with the ground) of the wheel 1.

From figure 1, it is possible to observe that on the lower part, each structure 2 bears a lower trolley 5 which constitutes the "heart" of the present invention. An upper trolley 6 is visible in the same figure 1, but this differs from the lower trolley 5 since it does not have motors, nor weights/ballast, but only wheels with mechanical support/contrast function. More will be stated on this point hereinbelow. Presently, the two trolleys 5, 5 (identical to each other) will be of the two wheels 1, 1 will be described.

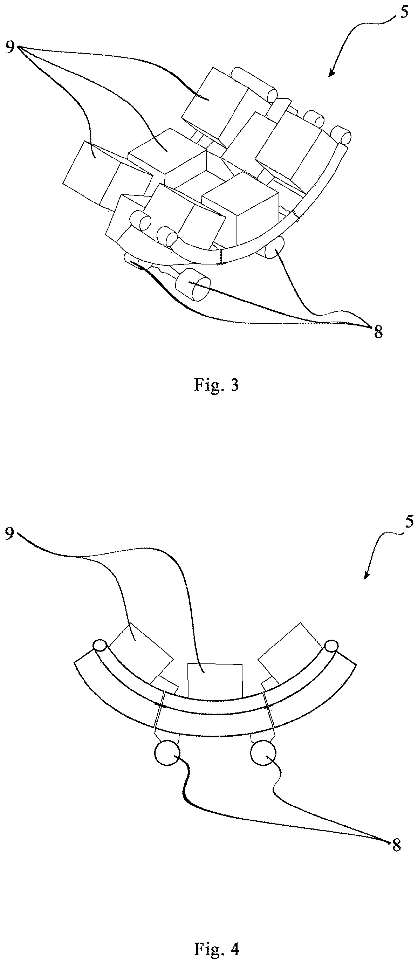

Reference will now be made to figures 3 and 4 which represent a lower trolley 5 of an internal structure 2 of a wheel 1.

The internal structures 2, 2 are rotatable with respect to each other in an independent manner around the horizontal axis X-X of the wheels 1, 1, as a consequence of that stated above, and they are connected to each other by the hub 3 (formed by the hollow cylindrical parts 4a, b) which passes through a central opening 7 schematized in figure 2.

Returning to figures 3 and 4, these show a lower trolley 5 in a perspective and side view, respectively.

The rover is a platform with scalable dimensions, and it can vary from a few dozen centimeters to several meters. The applications most recommended for this technology provide for dimensions between 1 and 2 meters, in order to be able to use components that are already available in other sectors for the practical achievement thereof; hence there is no need to develop special components, which allows considerably reducing the production costs.

The two-wheel rover or motor vehicle 1, 1 according to the present invention can be seen as the coupling of two independent means, the wheels 1, whose principle of mobility is based on a continuous unbalancing of the center of gravity thereof.

According to the present invention, within each wheel 1, a large weight is placed in proximity to the ground, defined "trolley", i.e. the aforesaid lower trolley 5, which is capable of being moved within the circumference of the corresponding wheel 1, due to the "hub motors", or motors at the hub 3, mounted thereon. The motors at the hub 8 are already known in the art and they are incorporated in an axle of a wheel which they directly actuate. For example, they are mounted on the wheels of bicycles, on the small wheels of skateboards, and so on. The trolley 5 of the present invention (hereinbelow, the adjective "lower" is omitted since the reference is clear) preferably has a curved shape, as is clear in Fig. 3, in particular, in order to remain in contact by means of its pairs of wheels 8, or in general a plurality of wheels 8, with the internal surface of the wheel 1.

At the moment when the trolley 5, on which heavy elements (lead batteries) 9 are mounted, is moved within the wheel 1, the internal equilibrium of the wheel 1 is lost, since the center of gravity thereof is moved. The wheel 1 will tend to roll in order to follow the new position of the center of gravity, which will correspond to the position at which the trolley 5 will be brought back "to the center".

If the trolley will continue to be moved due to its hub motors, or motors at the hub 3 power supplied by the batteries 9, the wheel 1 will never reach its position of equilibrium, hence realizing a continuous motion.

For example, without limitations with regard to the present invention, the hub motors 8 are electrical power supply motors which can be power supplied with 36 or 72 volts (non-binding values). As stated, the power supply comes from the lead batteries 9 (12 volts each), which, due to their high weight, can constitute the heavy elements 9 in figure 3 and in figure 4, mounted on the trolley 5. According to the present invention, also further heavy elements 9 could be added on the trolley 5, for example also constituting "inert masses", i.e. not a battery, or useful loads of any type. A configuration with 6 batteries, for example, could have a 72 volt power supply, placing all the batteries in series, adapted for the motors at the hub, and with an overall weight which varies between 90 and 120 kg (commercial batteries). A configuration with 3 batteries for 36 volt motors is another possible example, with a weight between 45 and 60 kg; however it should be considered that the concept of motion of the two-wheel motor vehicle 1, according to the present invention, requires that the weight that is moved within each wheel 1 be much heavier than the wheel 1 itself. The lower the ratio between the weight of the trolley 5 and the weight of the respective wheel 1, the more difficulty the trolley 5 will have in rolling the respective wheel 1. For this reason, it is advisable to maintain a ratio of at least one to three (ratio of wheel weight to trolley weight). Returning to the preceding example with 45 kg of batteries, and considering about 30 kg more due to the hub motors 8 and to the structural parts of the trolley 5, a weight of the trolley equal to 75 kg is achieved, which obliges a weight of the wheel of not more than 25 kg.

In figures 3 and 4, only as an example, there are four motors at the hub 3 8- arranged on two axles (the number 8 also indicates the small wheels of the trolley 5). Such figures are in fact only schematic and non-binding, and the number of hub motors 8 installed on the trolley 5 can be freely selected; preferably, however, a minimum of six hub motors are recommended, arranged on three axles. The first axle will then be placed at the center of the trolley 5, and the other two at the ends of the same trolley 5. The more motors at the hub 3 8- that are used, the more the weight of the trolley 5 will be distributed on the surface of the wheel. A more uniform distribution of the load leads to a lower probability of damage of the relative wheel 1 in case of terrain roughness. It is observed that, unlike the prior art, here the weight does not act on the shaft of the wheels (in this case, the hub 3), but rather it is unloaded directly on the ground through the internal cylindrical surface of the wheel 1, and in particular (preferably) in a uniformly distributed manner, due to the plurality of hub motors 8. Naturally, a greater number of motors 8 involves greater production costs and greater friction (if these are left non-powered); a hub motor being dragged brings forth non-negligible magnetic forces, as will be discussed hereinbelow with regard to energy consumptions.

A low-cost solution can provide for installing non-motorized small wheels in addition to the motors at the hub, or hub motors, whose only object is that of distributing the weight without contributing to the motion and without generating the resistance to dragging of a non-powered hub motor. The recommended position of the hub motor 8 (two at the center and two at each end of the trolley 5) is due to the behavior of the rover when encountering an obstacle.

At the moment when the two-wheel self-propelled vehicle of the present invention encounters an obstacle that is sufficiently high, such that it cannot be overcome by simple inertia of the wheels 1 which bring the vehicle to rise over such obstacle, the vehicle is stopped and in particular the rotation of the wheels 1 is stopped. However, the motion of the lower trolley 5 within the wheels 1 is not obstructed, and it continues to advance along the circumference of the wheel, moving away from the ground and being tilted. The more the trolley 5 is tilted, the greater the angular momentum brought to the wheel 1, up to a theoretical maximum of:

$$M = d*g*m$$

In this formula:

M = angular momentum of the force
d = distance between the center of mass of the trolley and the center of the wheel
g = gravitational acceleration
m = mass of the trolley.

This value is obtained with an infinite static friction between hub motor 8 and with a lower trolley 5 tilted by 90°. In reality, values very close to this are attained and the maximum is a few degrees below 90°, depending on the material within the wheel, on the coating used for the hub motor, on the shape selected for the lower trolley 5, and on the manner in which the latter distributes the weight on the (internal) surface of the wheel.

In the above-described obstacle situation, the vehicle will remain stopped until the trolley 5 is sufficiently tilted so to provide a thrust such to bring the wheel to overcome the obstacle. If the maximum thrust of the trolley 5 is not sufficient, such lower trolley 5 would rise beyond 90° and would be overturned. The actual application of the vehicle must then provide for an electronic control of the trolley which removes power from the hub motor 8 if it approaches tilts close to 90°. Electronic controls of this type are widely available on the market at minimum costs. Such controls are based on (i.e. they cooperate with) sensors that detect the tilt angle of the lower trolley 5 and/or its movement along the internal surface of the relative wheel 1.

Nevertheless, the presence of vertical suspensions as described below would in any case protect the vehicle from possible damage that would be caused by the overturning of the trolley 5, immediately bringing the latter back into an operating state.

If applications on particularly rough terrain are provided for, it is suitable, as Figures 3 and 4 schematically show, to divide the trolley into multiple sections, each connected to the next by means of a hinge, so as to allow deformations of the trolley which follow the deformations encountered by the wheel. Examples of terrain this type include off-road paths with presence of rocks/stones.

The two-wheel vehicle with independent internal motorized propulsion trolleys 5, according to the present invention, also comprises self-alignment systems (not represented in the figures), which are necessary for preventing the weight of the trolley 5 from being moved on a trajectory inside the wheel 1 which is not tangential to the circumference itself. In one possible embodiment, such self-alignment systems can comprise means provided with suspensions with rolling surfaces, placed at the sides of the trolley 5, e.g. rollers provided with suspensions whose rolling surfaces are in contact with the two flat internal (and opposite) surfaces belonging to the lateral walls 10, 11 of the respective wheel 1 (see Figs. 1 and 2). In one variant, or in addition to the just-described embodiment, said self-alignment systems can also comprise tracks traced in the profile of the wheel 1, within which the hub motor 8 is made to slide. In a further variant, said self-alignment systems (not shown in the figures) can provide for an electronic system that follows a colored strip traced on the bottom (internal periphery) of the wheel 1, and which reduces or increases the power of the hub motor 8 on one side of the trolley, as a function of the adherence (correspondence) of the actual path of the colored strip (which instead corresponds to the ideal path). In other words, if the trolley is veering on one side, the acceleration of the wheels 8 on one side with respect to the wheels 8 arranged on the other side of the trolley 5 realigns the trolley with the ideal path (colored strip), coinciding with the center line circumference, equidistant from the lateral vertical flat walls 10, 11 of the corresponding wheel 1.

On top of the trolley, a tank, a container or generally a useful load can be positioned, so as to occupy the empty volume of the wheel. The only expedient in this case is that of not positioning heavy loads in the upper part of the wheel, since they could interfere with the displacement of the center of gravity necessary for the motion of the rover. Naturally, the heavier the trolley, the freer one is in the selection of the useful load. The load positioned herein is not integral with the wheel, hence it will not be rotated during the movement of the rover, it will only be affected by the oscillations of the trolley.

The abovementioned central hub 3 serves to connect the two wheels 1, 1 with each other. The connection with this hub 3 (i.e. the two structures 2) serves to unload the weight of the same hub 3 on the respective trolleys 5. Otherwise the weight of the hub 3 would come to lie on the internal flat walls 11 of the wheels 1, i.e. on the two internal flat lateral walls (with annular shape) that face each other and face towards the hub 3 itself. As better explained hereinbelow, the fact that no load lies on such walls of the wheel constitutes one of the advantages of this platform.

At this point (see Fig. 1), it is also possible to optionally add the abovementioned system of vertical suspensions. i.e. the upper trolley 6, equipped with rolling surfaces 12 (associated with suitable suspension springs), placed in a position diametrically opposite the lower trolley 5, in contact with the curved internal surface of the respective wheel 1. This additional structure does not have the weights 9 and the hub motors 8, but rather only idle wheels 12 and a relative trolley 6. Such additional structure is particular important if the vehicle, or the lower trolley 5, starts to be overturned. In this condition, in fact, the position of the vertical suspension 6 (upper trolley 6) is temporarily switched with that of the lower trolley 5, coming to roll on the surface close to the ground and then accompanying the trolley 5 in its return travel towards its normal position. It is observed that the trolley 5 always tends to return into its (lower) position due to its high weight; the only event to avoid is that a trolley 5, being situated on the upper internal surface of the corresponding wheel 1, can freely fall due to lack of a support surface, offered in fact by the vertical suspension 6. The dimensions of the trolley 5 naturally depend on the dimensions selected for the wheel 1, and it is preferred that its form follows the curvature of the wheel as much as possible. The above-defined parameter d depends on this. This means that the ideal shape of the trolley is that of a circular arc. The parameter on which it is possible to intervene for varying the characteristics of the two-wheel vehicle of the invention is the width in degrees of this circular arc, which can be extended up to 180° (not recommended). The greater the extension of the lower trolley 5, the more distributed the weight, on condition that a sufficient number of hub motors or small wheels 8 are provided for suitably covering the surface of the trolley 5. However, with the increase of the extension of the lower trolley 5, also the load superimposition in case of obstacle will also increase; this is defined as that area of the trolley that comes to exceed the 90° tilt. The greater this area of superimposition, the lower the maximum thrust on the corresponding wheel 1, since the contribution of the trolley 5 to the thrust increases less rapidly with the increase of the tilt if one part thereof comes to be superimposed. It is nevertheless clear that with greater-size trolleys, i.e. "longer" trolleys, also the useful volume for adding load increases, and hence the maximum thrust once again is increased.

Satisfactory results have been obtained for circular arcs of 45-60° width.

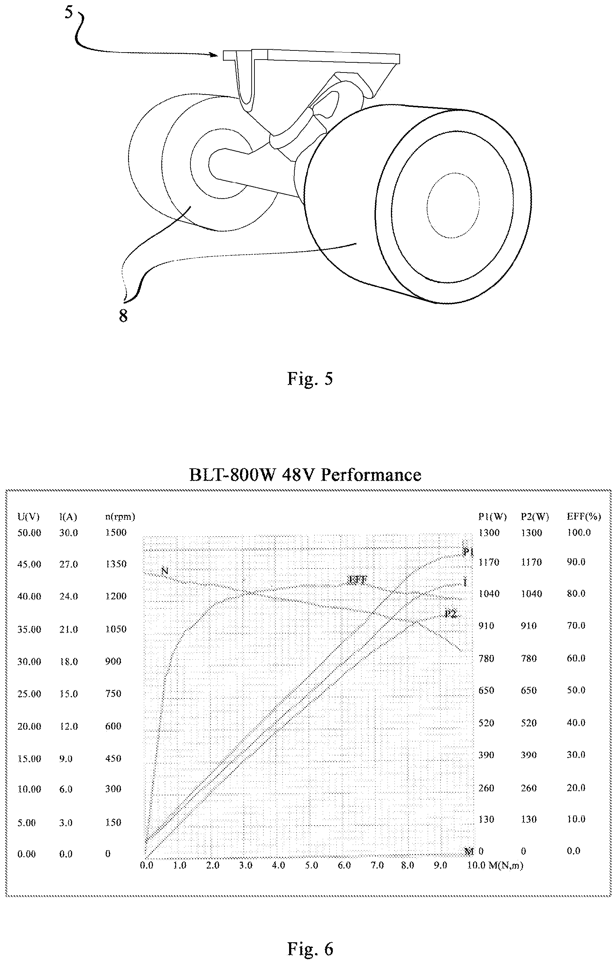

The energy efficiency of this motion is high, since the hub motors 8 are brought to work in their optimal conditions, with efficiencies close to 90%. Fig. 6 is the typical graph of the efficiency (Eff) of a motor at the hub in relation to the applied torque (Nm). As can be observed, the efficiency is rather constant on the characteristic curve, so long as a minimum torque is maintained, under which the brushless motor at its interior very quickly loses efficiency. A two-wheel vehicle power supplied by a single motor of this type would encounter considerable efficiency problems, since the vehicle would be sized for the maximum necessary powers (necessary for overcoming the obstacle) but would pass most of operations using only a fraction of that power, resulting in poor motor efficiency. This is one of the reasons for which the rover, i.e. the two-wheel motor vehicle of the invention, mounts multiple motorized axles, which ensure an additional degree of freedom in managing power division. A single hub motor is sized for providing only a fraction of the maximum necessary power, hence in case of low power request it will suffice to not power supply a part of the hub motors 8, allowing them to be dragged, maintaining high energy efficiency. This ensures high autonomies, also using the lead batteries 9, which are well-known to not supply high charge capacities.

Of course, the activation of the various hub motors is managed by an electronic control unit. These motors at the hub 8 can be of the same type, but it is also possible to use motors at the hub 8 with powers different from each other. Preferably, the motors at the hub 3, associated with the two axles of the trolley 5 of each wheel 1, which are closer to the opposite free ends of the same trolley 5 can have more power than the other motors at the hub 3, and in particular more power than those close to (or coinciding with) the central part of the trolley 5.

Since no weight comes to lie on the external casing of each wheel 1, for the manufacturing of such casing it is not necessary to use rigid materials; it can be made with light materials, possibly rubbery materials in order to have the best on-road performances. This is very important in consideration of the fact that, as explained above, the wheel must be as light as possible. It is also possible to not entirely cover the flat sides 10, 11 of the wheel 1, as in the form schematically shown in Fig. 2. This further contributes to lightening the wheels 1. Of course, if one uses a form of this type, it is necessary to account for possible applications in amphibious field and accurately calculate where the waterline is positioned. In particular, however, the opening 7 of Fig. 2 can be covered on each side of the wheel 1 by suitable removable circular plates (not represented), openable for maintenance. In amphibious field, such plates can be provided with seals of various type, depending on the position of the waterline.

An important consideration can be made regarding the producibility of these wheels. Unlike the wheels of other heavy vehicles present in the prior art, which are structural elements, in this vehicle the wheels act only as a rolling surface and can be made of light plastics or rubbers by means of rotational molding techniques, lowering costs by an order of magnitude with respect to productions in other manufacturing techniques which account for the structural requirements.

The system describe up to now allows moving a single wheel 1 forward and backward, independent of the other wheel 1.

By coupling together the two wheels, each compliant with the preceding description, it is possible to make complex paths as desired, by means of the technique defined "Skeed Steering". Specifically, by making a speed difference between the two wheels, a rotation torque will be formed, which will steer the vehicle. Such rotation torque is such to be able to rotate the vehicle around the (geometric) axis of one of the two wheels 1, if one of the two wheels is stopped and the other is moving, or even around the central axle of the vehicle (situated between the two wheels and corresponding to the axle of the hub 3), if the two wheels 1, 1 are moved with the same speed and in opposite directions. The vehicle can thus describe any trajectory on the ground. This characteristic can in particular be exploited in the applications in which the vehicle is obliged to be moved in pre-established narrow spaces, for example in farming applications, if it is desired to use it for treating vineyards with specific parasiticide products, or for other treatment types, for which the vehicle is obliged to be moved between the rows and bend at their ends. The characteristics of compactness, movement ease and stability of the vehicle are particularly well-suited to this type of application. In this case, the two-wheel vehicle of the invention will be provided with tanks of parasiticide products, mounted as weights 9 on the abovementioned trolleys 5. The vehicle will be provided with pumps for the parasiticide fluid and with an orientable arm (with articulation) mounted on the hub 3, with nozzle for spraying the product. The vehicle will generally be equipped with various sensors and with a viewing camera, based on the use destination. In the farming application, it could additionally have a multi-spectral camera capable of detecting the plants of the vineyard which are suffering, which (as is known) emit radiations with particular frequencies. For other types of farm work or the like, the hub will support other tools.

The vehicle can act as a rescue means in hard-to-reach or dangerous zones, e.g. in the case of natural disasters such as earthquakes, avalanches, floods, landslides or the like.

The vehicle can comprise a GPS system that interacts with an electronic control unit and it makes use of a paths stored in a memory, so that the vehicle can follow a pre-established trajectory. Such pre-established trajectory can be learned with a preliminary learning process, remote-controlling the vehicle along the actual path. Otherwise, the vehicle can be remote-controlled each time in a manual manner.

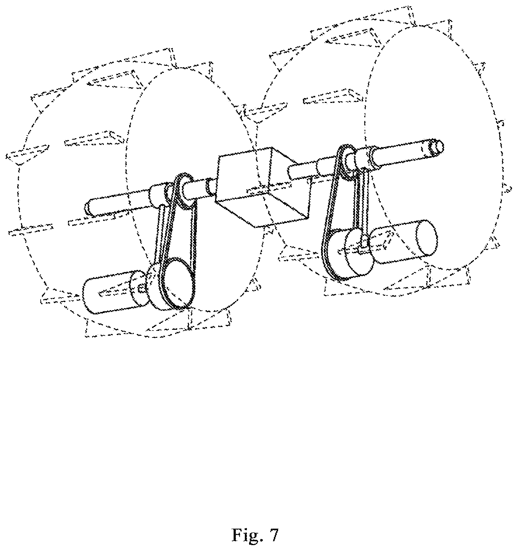

The principle of movement of the vehicle of the invention can also be applied to liquid surfaces, rendering it an amphibious vehicle, with the expedient of making the external surface of the wheel with a structure that grips the liquids. One possibility in this sense is represented by the wheels of the vehicle of Fig. 7, belonging to the abovementioned prior art (Fig. 1 in WO 2017/042230). Here, the rolling surface in contact with the ground is convex and the fins serve to grip the water when the amphibious vehicle enters water.

The present invention has only been described with regard to particular exemplifying solutions/embodiments, but the protection of the inventive concept is clearly extended to all the solutions equivalent, or technically equivalent, to those that fall within the scope of the following claims.

For example, even if the motors at the hub have been described as motors power supplied by batteries, it is clear that it is also possible to mount a small electrical generator on the trolley (5). Such electrical generator supplies electrical energy, obtaining such energy from the combustion of a fossil fuel. This would increase the autonomy of the two-wheel vehicle of the invention in zones where environmental pollution is not critical.

In a high-end application, lithium ion batteries could be alongside the lead batteries. Such lithium ion batteries would ensure greater autonomies, though they would considerably increase the final cost of the vehicle.

In addition, in one variant of the invention, the trolleys 5 could be removably mounted on the structure 2 so as to be able to substitute them, if damaged, or possibly also in order to mount other trolleys 5 with different "radius of curvature", suitable for wheels 1 of different radius. Likewise, it would be possible to make a structure 2 of the type with adjustable radial extension, such that it can be adapted, of course within certain limits, to various dimensions of wheels 1, without having to make a completely new structure 2.

In the present description and in the claims, motors at the hub (3) are describe as driving means (8) for the small wheels of the trolley. Of course, "similar" driving means (8) could also be provided for on the trolley (5), composed of a series of small motors and relative gears mounted on top of the trolley, each of which associated with a respective axle of a pair of wheels/small wheels of the trolley (5). Each small motor could be activated, i. e. inserted independent of the others, and would transit the motion to the relative axle even if not directly on the axle as occurs for a motor in the hub. One such solution (like others similar, such as a movement assisted by racks) is not the preferred solution, but it is clearly included in the invention, since the primary inventive concept is that of eliminating the loads from the axle of the wheel of the prior art, instead arranging them directly on the trolleys, which, being situated in a zone of the internal surface of the wheel 1 situated in the region of the wheel 1 which is directly in contact with the ground, directly unload on the ground the effect of the weights 9 of the trolley (necessary for the propulsion), "spreading them" in particular in a uniform manner over a wide surface that corresponds with the length of the trolley 5.

The object of the present invention has innumerable applications, also for fun/free-time applications, such as a remote-controlled toy for children.

Due to the ample empty volume within the wheels, the present invention is suitable for applications in the context of transportation and delivery, in particular for amphibious travels.

Due to its capacities of movement over irregular surfaces, the present invention can be used in farming or in disaster areas (affected by landslides, avalanches, floods, earthquakes and the like).

Electronic devices can be housed within the wheels, which thus become an autonomous shelter.

List of reference symbols

| 1 | wheel |
| 2 | structure (which bears the trolley 5) |
| 3 | hub |
| 4 | (a, b) parts of the hub |
| 5 | trolley (lower) |
| 6 | upper trolley, vertical suspension |
| 7 | lateral opening of a wheel |
| 8 | motor at the hub, so-called "hub motor" |
| 9 | weights, (lead) batteries |
| 10 | (external) lateral face of the wheel 1 |
| 11 | (internal) lateral face of the wheel 1 |
| 12 | small wheels of the vertical suspension 6 |

**Claims**

1.   Two-wheel vehicle comprising two parallel drive wheels (1) constituting internally hollow bodies, each having two lateral faces (10, 11) and a rolling surface that is extended therebetween, said wheels (1) being driven by driving means (8) respectively arranged within the wheels (1) themselves and whose function is that of moving the center of gravity of the wheels (1), causing the rotation thereof in one sense and in the other sense, said wheels (1) being operatively connected to each other by means of a connection means (3) longitudinally extended along a geometric horizontal axis (X) of the wheels (1), wherein each wheel (1) is rotatable around said geometric horizontal axis (X) of the wheels (1) in a manner independent from the other wheel (1), **characterized in that** said connection means (3) is a hub (3) formed by two parts that are rotatable with respect to each other (4a, 4b), each of said parts (4a, 4b) being connected to a relative structure (2) arranged within the corresponding wheel (1), and each structure (2) of each wheel (1) able to rotate with respect to the latter, lying with its own weight and that of the hub (3) directly on a trolley (5) with small wheels, but not on a lateral face (11) of the wheel (1), **in that** said trolley (5) supports weights (9) formed at least partly by power supply batteries (9) of said driving means (8), which are formed by motors at the hub (3) directly mounted on at least one part of the axles of said small wheels of said trolley (5), **and in that** said trolley (5) forms part of the structure (2) and, by means of at least some of its small wheels provided with motor at the hub (3), it lies against an internal surface of the respective wheel (1), opposite with respect to the external rolling surface of the wheel (1) itself.

2. Two-wheel vehicle according to claim 1, **characterized in that** said trolley (5) has a shape that is extended along an arc of a circle, whose constant radius of curvature is such that its own small wheels are all in contact with said internal surface of the respective wheel (1), opposite with respect to the external rolling surface of the wheel (1) itself.

3. Two-wheel vehicle according to claim 1 or 2, **characterized in that** some of the small wheels of the trolley (5) are idle.

4. Two-wheel vehicle according to any one of the claims 1 or 2, **characterized in that** all the small wheels of the trolley (5) are driven by motors at the hub (3).

5. Two-wheel vehicle according to any one of the preceding claims, **characterized in that** said motors at the hub (3) are at least partly suppliable by a generator which burns a fossil fuel.

6. Two-wheel vehicle according to any one of the preceding claims, **characterized in that** the structure (2) of each wheel (1) is radially extended within each wheel (1), forming a vertical suspension (6) at the end of the structure (2) diametrically opposite the trolley (5), such vertical suspension (6) for example comprising an upper sprung trolley, equipped with idle wheels (12).

7. Two-wheel vehicle according to any one of the preceding claims, **characterized in that** the motors at the hub (3) of the trolley (5) have different powers, and those arranged close to the free ends of the trolley (5) have greater powers than those arranged close to the center of the trolley (5).

8. Two-wheel vehicle according to any one of the preceding claims, **characterized in that** it has self-alignment systems for the trolley (5), adapted to maintain the trolley (5) along a trajectory tangential to the circumference of the respective wheel (1), i.e. on a plane orthogonal to the geometric axis (X) of the wheel (1).

9. Two-wheel vehicle according to any one of the preceding claims, **characterized in that** the external rolling surface of each wheel (1) has a convex or flat shape.

10. Two-wheel vehicle according to any one of the preceding claims, **characterized in that** the external rolling surface of each wheel (1) has a convex shape and has fins at the sides of the external rolling surface, for advancing the vehicle over water.

11. Two-wheel vehicle according to any one of the preceding claims, **characterized in that** it comprises an electronic control unit, which controls the motors at the hub (3) in an independent manner with respect to each other, in a manner such to use the power of the various motors at the hub (3) in an optimal manner, in particular for overcoming obstacles of various type, and in a manner so as to maintain an optimal efficiency and hence a greater autonomy of the two-wheel vehicle (1).

12. Two-wheel vehicle according to any one of the preceding claims, **characterized in that** it comprises a rubber coating on the wheels (1), or wherein the wheels are substantially made of plastic or light rubber.

13. Two-wheel vehicle according to any one of the preceding claims, **characterized in that** the trolleys (5) are removably mounted on the respective structures (2), **in that** the structures (2) have dimensions or radii that are adjustable in order to adapt them to the various different-size wheels (1), and/or **in that** the hub (3) has an adjustable length and said two parts rotatable with respect to each other (4a, 4b) provide for a bearing for such rotation.

14. Two-wheel vehicle according to any one of the preceding claims, **characterized in that** said weights (9) on the trolleys (5) of at least one wheel are useful loads, e.g. tanks for liquid or solid products, for example parasiticide products for agriculture.

15. Two-wheel vehicle according to any one of the preceding claims, **characterized in that** it comprises at least one of the following characteristics:

- a GPS system;
- a memory for storing a travel path;
- a viewing camera;
- a multi-spectral camera;
- means for manually controlling the vehicle;
- tools or equipment mounted on the hub (3), preferably lightweight, for example an orientable arm for spraying a parasiticide, equipped with spray nozzle and with ducts from the arm to the parasiticide tanks arranged on the trolley (5), etc.

16. Two-wheel vehicle according to claim 1, whose trolleys (5) with small wheels are divided into multiple sections, each of which connected to an adjacent section by means of a hinge, so as to allow deformations of the trolley which follow deformations of a corresponding wheel (1) during driving.

17. Two-wheel vehicle according to claim 1, wherein the power supply batteries (9) are lead batteries possibly combined, so as to ensure greater autonomies, with lithium ion batteries.


**Patentansprüche**

1. Zweiradfahrzeug, das zwei parallele Antriebsräder (1) aufweist, die innen hohle Körper bilden, die jeweils zwei Seitenflächen (10, 11) und eine sich dazwischen erstreckende Rolloberfläche aufweisen, wobei die Räder (1) durch Antriebsmittel (8) angetrieben werden, die jeweils im innerhalb der Räder (1) selbst angeordnet sind und deren Funktion darin besteht, den Schwerpunkt der Räder (1) zu bewegen, was deren Drehung in einem Sinn und im anderen Sinn zu bewirken, wobei die Räder (1) mittels eines Verbindungsmittels (3), das sich in Längsrichtung entlang einer geometrischen horizontalen Achse (X) der Räder (1) erstreckt, operativ miteinander verbunden sind, wobei jedes Rad (1) um die geometrische horizontale Achse (X) der Räder (1) in einer von dem anderen Rad (1) unabhängigen Weise drehbar ist, **dadurch gekennzeichnet, dass** das Verbindungsmittel (3) eine Nabe (3) ist, die aus zwei Teilen gebildet ist, die in Bezug aufeinander drehbar sind (4a, 4b), jeder der Teile (4a, 4b) mit einer entsprechenden Struktur (2) verbunden ist, die innerhalb des entsprechenden Rades (1) angeordnet ist, und jede Struktur (2) eines jeden Rades (1) in der Lage ist, sich in Bezug auf das letztere zu drehen, mit dem eigenen Gewicht und dem der Nabe (3) direkt auf einem Wagen (5) mit kleinen Rädern, aber nicht auf einer Seitenfläche (11) des Rades (1) liegend, **dadurch, dass** der Wagen (5) Gewichte (9) trägt, die zumindest teilweise durch Leistungsversorgungsbatterien (9) der Antriebsmittel (8) gebildet werden, die von Motoren an der Nabe (3) gebildet werden, die direkt auf mindestens einem Teil der Achsen der kleinen Räder des Wagens (5) montiert sind, **und dadurch, dass** der Wagen (5) einen Teil der Struktur (2) bildet und mittels mindestens einigen seiner kleinen Räder, die mit einem Motor an der Nabe (3) versehen sind, an einer inneren Oberfläche des jeweiligen Rades (1) anliegt, die der äußeren Rollfläche des Rades (1) selbst gegenüberliegt.

2. Zweiradfahrzeug nach Anspruch 1, **dadurch gekennzeichnet, dass** der Wagen (5) eine Form hat, die sich entlang eines Kreisbogens erstreckt, dessen konstanter Krümmungsradius so beschaffen ist, dass seine eigenen kleinen Räder alle in Kontakt mit der inneren Oberfläche des jeweiligen Rades (1) stehen, und zwar gegenüber der äußeren Rolloberfläche des Rades (1) selbst.

3. Zweiradfahrzeug nach Anspruch 1 oder 2, **dadurch gekennzeichnet, dass** sich einige der kleinen Räder des Wagens (5) im Leerlauf befinden.

4. Zweiradfahrzeug nach einem der Ansprüche 1 oder 2, **dadurch gekennzeichnet, dass** alle kleinen Räder des Wagens (5) durch Motoren an der Nabe (3) angetrieben werden.

5. Zweiradfahrzeug nach einem der vorhergehenden Ansprüche, **dadurch gekennzeichnet, dass** die Motoren an der Nabe (3) zumindest teilweise durch einen Generator, der einen fossilen Brennstoff verbrennt, versorgt werden können.

6. Zweiradfahrzeug nach einem der vorhergehenden Ansprüche, **dadurch gekennzeichnet, dass** die Struktur (2) eines jeden Rades (1) radial innerhalb eines jeden Rades (1) verlängert ist und eine vertikale Aufhängung (6) an dem dem Wagen (5) diametral gegenüberliegenden Ende der Struktur (2) aufweist, wobei diese vertikale Aufhängung (6) zum Beispiel ein oberes gefedertes Fahrwerk, das mit Leerlaufrädern (12) ausgestattet ist, aufweist.

7. Zweiradfahrzeug nach einem der vorhergehenden Ansprüche, **dadurch gekennzeichnet, dass** die Motoren an der Nabe (3) des Wagens (5) unterschiedliche Leistungen besitzen und diejenigen, die nahe an den freien Enden des Wagens (5) angeordnet sind, größere Leistungen besitzen als diejenigen, die nahe an der Mitte des Wagens (5) angeordnet sind.

8. Zweiradfahrzeug nach einem der vorhergehenden Ansprüche, **dadurch gekennzeichnet, dass** es Selbstausrichtungssysteme für den Wagen (5) aufweist, die dazu angepasst sind, den Wagen (5) entlang einer Traj ektorie zu halten, die tangential zum Umfang des jeweiligen Rades (1 ) verläuft, d. h. in einer Ebene, die orthogonal zu der geometrischen Achse (X) des Rades (1) steht.

9. Zweiradfahrzeug nach einem der vorhergehenden Ansprüche, **dadurch gekennzeichnet, dass** die äußere Rolloberfläche eines jeden Rades (1) eine konvexe oder ebene Form aufweist.

10. Zweiradfahrzeug nach einem der vorhergehenden Ansprüche, **dadurch gekennzeichnet, dass** die äußere Rolloberfläche eines jeden Rades (1) eine konvexe Form hat und an den Seiten der äußeren Rolloberfläche Flossen aufweist, um das Verkehrsmittel über Wasser voranzubringen.

11. Zweiradfahrzeug nach einem der vorhergehenden Ansprüche, **dadurch gekennzeichnet, dass** es eine elektronische Steuereinheit aufweist, die die Motoren an der Nabe (3) auf eine voneinander unabhängige Weise steuert, und zwar auf eine Weise, dass die Leistung der verschiedenen Motoren an der Nabe (3) auf eine optimale Weise genutzt wird, insbesondere zum Überwinden von Hindernissen verschiedener Art, und auf eine Weise, dass ein optimaler Wirkungsgrad und somit eine größere Autonomie des Zweiradfahrzeugs (1) erhalten bleibt.

12. Zweiradfahrzeug nach einem der vorhergehenden Ansprüche, **dadurch gekennzeichnet, dass** es eine Gummibeschichtung auf den Rädern (1) aufweist, oder wobei die Räder im Wesentlichen aus Kunststoff oder leichtem Gummi bestehen.

13. Zweiradfahrzeug nach einem der vorhergehenden Ansprüche, **dadurch gekennzeichnet, dass** die Wägen (5) abnehmbar an den jeweiligen Strukturen (2) montiert sind, **dadurch, dass** die Strukturen (2) Abmessungen oder Radien aufweisen, die einstellbar sind, um sie an die verschiedenen Räder (1) unterschiedlicher Größe anzupassen, und/oder **dadurch, dass** die Nabe (3) eine einstellbare Länge aufweist und die beiden gegeneinander drehbaren Teile (4a, 4b) ein Lager für eine solche Drehung vorsehen.

14. Zweiradfahrzeug nach einem der vorhergehenden Ansprüche, **dadurch gekennzeichnet, dass** die Gewichte (9) an den Wägen (5) mindestens eines Rades Nutzlasten sind, z. B. Tanks für flüssige oder feste Produkte, zum Beispiel Schädlingsbekämpfungsmittel für die Landwirtschaft.

15. Zweiradfahrzeug nach einem der vorhergehenden Ansprüche, **dadurch gekennzeichnet, dass** es mindestens eines der folgenden Merkmale aufweist

- ein GPS-System;
- einen Speicher zum Speichern eines Fahrweges;
- eine Beobachtungskamera;
- eine Mult spektralkamera;
- Mittel zum manuellen Steuern des Fahrzeugs;
- an der Nabe (3) montierte, vorzugsweise leichtgewichtige Werkzeuge oder Ausrüstung, zum Beispiel ein schwenkbarer Arm zum Versprühen eines Schädlingsbekämpfungsmittels, ausgerüstet mit einer Sprühdüse und mit Leitungen von dem Arm zu den auf dem Wagen (5) angeordneten Schädlingsbekämpfungsmitteltanks, usw.

16. Zweiradfahrzeug nach Anspruch 1, dessen Wägen (5) mit kleinen Rädern in mehrere Abschnitte unterteilt sind, von denen jeder mit einem benachbarten Abschnitt mittels eines Scharniers verbunden ist, um Verformungen des Wagens zu ermöglichen, die Verformungen eines entsprechenden Rades (1) während des Fahrens folgen.

17. Zweiradfahrzeug nach Anspruch 1, **dadurch gekennzeichnet, dass** die Leistungsversorgungsbatterien zur (9) Bleibatterien, die, um eine größere Autonomie zu gewährleisten, mit Lithium-Ionen-Batterien kombiniert werden können.

**Revendications**

1. Véhicule à deux roues comprenant deux roues motrices parallèles (1) constituant des corps creux à l'intérieur, chacune ayant deux faces latérales (10,11) et une surface de roulement qui s'étend entre les deux, lesdites roues (1) étant entraînées par des moyens d'entraînement (8) agencés respectivement à l'intérieur des roues (1) ellesmêmes et dont la fonction est de déplacer le centre de gravité des roues (1), causant la rotation de celles-ci dans un sens et dans l'autre sens, lesdites roues (1) étant reliées de manière opérationnelle l'une à l'autre à l'aide de moyens de liaison (3) s'étendant longitudinalement le long d'un axe horizontal géométrique (X) des roues (1), dans lequel chaque roue (1) est apte à tourner autour dudit axe horizontal géométrique (X) des roues (1) d'une manière indépendante de l'autre roue (1), **caractérisé en ce que** les moyens de liaison (3) sont un moyeu (3) formé par deux parties qui sont aptes à tourner l'une par rapport à l'autre (4a, 4b), chacune desdites parties (4a, 4b) étant reliées à une structure relative (2) agencée à l'intérieur de la roue (1) correspondante, et chaque structure (2) de chaque roue (1) apte à tourner par rapport à cette dernière, en reposant avec son propre poids et celui du moyeu (3) directement sur un chariot (5) avec de petites roues, mais pas sur une face latérale (11) de la roue (1), **en ce que** ledit chariot (5) supporte des poids (9) formés au moins en partie par des batteries d'alimentation électrique (9) desdits moyens d'entraînement (8), qui sont formés par des moteurs sur le moyeu (3) monté directement sur au moins une partie des essieux desdites petites roues dudit chariot (5), **et en ce que** ledit chariot (5) forme une partie de la structure (2) et, à l'aide de quelques-unes au moins de ses petites roues pourvues du moteur sur le moyeu (3), il repose contre une surface interne de la roue (1) respective, à l'opposé par rapport à la surface de roulement externe de la roue (1) elle-même.

2. Véhicule à deux roues selon la revendication 1, **caractérisé en ce que** ledit chariot (5) a une forme qui s'étend le long d'un arc de cercle dont le rayon de courbure constant est tel que ses propres petites roues sont toutes en contact avec ladite surface interne de la roue (1) respective, à l'opposé par rapport à la surface de roulement externe de la roue (1) elle-même.

3. Véhicule à deux roues selon la revendication 1 ou 2, **caractérisé en ce que** certaines des petites roues du chariot (5) sont folles.

4. Véhicule à deux roues selon l'une quelconque des revendications 1 ou 2, **caractérisé en ce que** toutes les petites roues du chariot (5) sont entraînées par des moteurs sur le moyeu (3).

5. Véhicule à deux roues selon l'une quelconque des revendications précédentes, **caractérisé en ce que** lesdits moteurs sur le moyeu (3) sont au moins en partie aptes à être alimentés par un générateur qui brûle un carburant fossile.

6. Véhicule à deux roues selon l'une quelconque des revendications précédentes, **caractérisé en ce que** la structure (2) de chaque roue (1) s'étend radialement à l'intérieur de chaque roue (1), formant une suspension verticale (6) à l'extrémité de la structure (2) diamétralement opposée au chariot (5), une telle suspension verticale (6) comprenant par exemple un chariot supérieur à ressort, équipé de roues folles (12).

7. Véhicule à deux roues selon l'une quelconque des revendications précédentes, **caractérisé en ce que** les moteurs sur le moyeu (3) du chariot (5) ont des puissances différentes, et ceux qui sont agencés près des extrémités libres du chariot (5) ont des puissances supérieures à ceux qui sont agencés près du centre du chariot (5).

8. Véhicule à deux roues selon l'une quelconque des revendications précédentes, **caractérisé en ce qu'il** a des systèmes d'auto-alignement pour le chariot (5), adaptés pour maintenir le chariot (5) le long d'une trajectoire tangentielle à la circonférence de la roue (1) respective, c'est-à-dire sur un plan orthogonal à l'axe géométrique (X) de la roue (1).

9. Véhicule à deux roues selon l'une quelconque des revendications précédentes, **caractérisé en ce que** la surface de roulement externe de chaque roue (1) à une forme convexe ou plate.

10. Véhicule à deux roues selon l'une quelconque des revendications précédentes, **caractérisé en ce que** la surface de roulement externe de chaque roue (1) à une forme convexe et a des ailettes sur les côtés de la surface de roulement externe, pour faire avancer le véhicule sur l'eau.

11. Véhicule à deux roues selon l'une quelconque des revendications précédentes, **caractérisé en ce qu'il** comprend une unité de commande électronique, qui commande les moteurs sur le moyeu (3) d'une manière indépendante les uns par rapport aux autres, de manière à utiliser la puissance des différents moteurs sur le moyeu (3) d'une manière optimale, en particulier pour surmonter des obstacles de divers types, et de manière à maintenir une efficacité optimale et donc une plus grande autonomie du véhicule à deux roues (1).

12. Véhicule à deux roues selon l'une quelconque des revendications précédentes, **caractérisé en ce qu'il** comprend un revêtement en caoutchouc sur les roues (1), ou dans lequel les roues sont faites sensiblement de plastique ou de caoutchouc léger.

13. Véhicule à deux roues selon l'une quelconque des revendications précédentes, **caractérisé en ce que** les chariots (5) sont montés de manière amovible sur les structures (2) respectives, **en ce que** les structures (2) ont des dimensions ou des rayons qui sont ajustables afin de les adapter aux diverses roues (1) de tailles différentes, et/ou **en ce que** le moyeu (3) a une longueur ajustable et lesdites deux parties aptes à tourner l'une par rapport à l'autre (4a, 4b) offrent un appui pour une telle rotation.

14. Véhicule à deux roues selon l'une quelconque des revendications précédentes, **caractérisé en ce que** lesdits poids (9) sur les chariots (5) d'au moins une roue sont des charges utiles, par exemple des réservoirs pour des produits liquides ou solides, par exemple des produits parasiticides pour l'agriculture.

**15.** Véhicule à deux roues selon l'une quelconque des revendications précédentes, **caractérisé en ce qu'il** comprend l'une au moins des caractéristiques suivantes :

- un système GPS ;
- une mémoire pour stocker un itinéraire de déplacement ;
- une caméra de visualisation ;
- une caméra multispectrale ;
- des moyens pour commander manuellement le véhicule ;
- des outils ou un équipement montés sur le moyeu (3), de préférence légers, par exemple un bras orientable pour pulvériser un parasiticide, équipés de buses de pulvérisation et de conduits allant du bras jusqu'au réservoir de parasiticide agencé sur le chariot (5), etc.

**16.** Véhicule à deux roues selon la revendication 1, dont les chariots (5) avec de petites roues sont divisés en de multiples sections, chacune étant reliée à une section adjacente à l'aide d'une charnière, de manière à permettre des déformations du chariot qui suivent les déformations d'une roue (1) correspondante pendant la circulation.

**17.** Véhicule à deux roues selon la revendication 1, dans lequel les batteries d'alimentation électrique (9) sont des batteries au plomb éventuellement combinées, de manière à assurer des autonomies plus grandes, avec des batteries au lithium.

Fig. 1

Fig. 2

5

9

Fig. 3

8

5

9

8

Fig. 4

Fig. 5

## BLT-800W 48V Performance

| U(V) | I(A) | n(rpm) | | P1(W) | P2(W) | EFF(%) |
|------|------|--------|--|-------|-------|--------|
| 50.00 | 30.0 | 1500 | | 1300 | 1300 | 100.0 |
| 45.00 | 27.0 | 1350 | | 1170 | 1170 | 90.0 |
| 40.00 | 24.0 | 1200 | | 1040 | 1040 | 80.0 |
| 35.00 | 21.0 | 1050 | | 910 | 910 | 70.0 |
| 30.00 | 18.0 | 900 | | 780 | 780 | 60.0 |
| 25.00 | 15.0 | 750 | | 650 | 650 | 50.0 |
| 20.00 | 12.0 | 600 | | 520 | 520 | 40.0 |
| 15.00 | 9.0 | 450 | | 390 | 390 | 30.0 |
| 10.00 | 6.0 | 300 | | 260 | 260 | 20.0 |
| 5.00 | 3.0 | 150 | | 130 | 130 | 10.0 |
| 0.00 | 0.0 | 0 | | 0 | 0 | 0.0 |

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1357571 A
- DE 3103961 A
- WO 2017042230 A